Europäisches Patentamt

European Patent Office

Office européen des brevets

(11) Veröffentlichungsnummer: **0 269 864 B1**

## EUROPÄISCHE PATENTSCHRIFT

(45) Veröffentlichungstag der Patentschrift: **29.01.92**

(21) Anmeldenummer: **87115892.9**

(22) Anmeldetag: **29.10.87**

Die Akte enthält technische Angaben, die nach
dem Eingang der Anmeldung eingereicht wurden
und die nicht in dieser Patentschrift enthalten sind.

(51) Int. Cl.⁵: **B01D 46/12**, B01D 50/00,
F01N 3/02

(54) **Filtervorrichtung mit Flüssigkeitsbenetzten Filterelementen.**

(30) Priorität: **31.10.86 DE 3637428**
**03.04.87 DE 3711294**

(43) Veröffentlichungstag der Anmeldung:
**08.06.88 Patentblatt 88/23**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**EP-A- 0 146 287       FR-A- 437 978**
**FR-A- 1 206 314       GB-A- 1 357 034**
**US-A- 1 913 885       US-A- 3 521 429**

(73) Patentinhaber: **SIMMERLEIN-ERLBACHER,**
**Ewald Wilhelm**
**Langer Berg 2**
**W-8570 Pegnitz(DE)**

(72) Erfinder: **SIMMERLEIN-ERLBACHER, Ewald**
**Wilhelm**
**Langer Berg 2**
**W-8570 Pegnitz(DE)**

(74) Vertreter: **LOUIS, PÖHLAU, LOHRENTZ & SE-**
**GETH**
**Kesslerplatz 1 Postfach 3055**
**W-8500 Nürnberg-1(DE)**

**Beschreibung**

Die Erfindung betrifft eine Filtervorrichtung, umfassend mindestens eine Filtereinrichtung zur Filterung von Schadstoff-, Staub- bzw. anderer Fremdstoffpartikel aus einem gasförmigen Strömungsmittel, mit einem Substrat und einer das Substrat benetzenden Filterflüssigkeit.

In geschlossenen Räumen ergibt sich häufig dadurch eine Belästigung für sich in diesen Räumen befindlichen Personen, dass durch den Luftzutritt zu diesen Räumen Schadstoff-, Staub- oder andere Fremdstoffpartikel eingeführt werden. Dies gilt beispielsweise für Räume in Kaufhäusern, Hotels, bei Behörden usw.. Der Luftzutritt zu diesen Räumen erfolgt beispielsweise über Belüftungsschächte, die zum Filtern der Schadstoff-, Staub- und anderen Fremdstoffpartikel mit einer Filtereinrichtung in Gestalt von Matten oder Sieben ausgebildet sein können. Entsprechende Filtereinrichtungen gibt es auch für Kraftfahrzeuge, um die Fahrgastzelle von Schadstoffpartikeln bzw. Staubpartikeln mehr oder weniger freizuhalten.

Bei bekannten Filtereinrichtungen ist der Strömungswiderstand durch die Filtereinrichtung hindurch von der Porosität des Substrates umgekehrt proportional abhängig. Das bedeutet, dass ein grosser mittlerer Maschen- bzw. Porendurchmesser des Substrates einen kleinen Strömungswiderstand ergibt und umgekehrt. Wenn mit einer solchen Filtereinrichtung sehr kleine Partikel ausgefiltert werden sollen, ist es erforderlich, dass die mittlere Maschen- bzw. Porengrösse entsprechend klein ist. Dadurch ergibt sich jedoch ein relativ grosser Strömungswiderstand durch die Filtereinrichtung hindurch. Ein weiterer Mangel derartiger Filtereinrichtungen besteht darin, dass sie durch die Anlagerung der ausgefilterten Partikel bereits nach einer relativ kurzen Einsatzdauer verstopfen können, so dass sie unbrauchbar werden.

Aus der US-A-1.913.885 ist es bereits bekannt, an der Oberfläche eines Filtermediums einen Film auszubilden, wobei dieser Film aus einer gleichzeitig für die Reinigung des Filters verwendbaren Flüssigkeit besteht, wobei hierfür ein ziemlich dünnes Öl, gegebenenfalls auch Wasser, eingesetzt wird.

In der US-A-3.521.429 ist die Anwendung einer synthetischen, ölähnlichen Flüssigkeit zur Bildung einer Oberflächenbeschichtung eines Filters beschrieben, wobei insbesondere unterschiedliche Silikonflüssigkeiten, also Silikonöle, erwähnt werden. Es ist in dieser Druckschrift darauf hingewiesen, dass übliche Kohlenwasserstoff-Öle für die Zwecke die mit der US-A-3.521.429 verfolgt werden, ungeeignet sind.

Die Verwendung von Wasser oder einem dünnflüssigen Öl oder einem Silikonöl als Flüssigkeit zur Benetzung der Filteroberfläche, wie es gemäss dem Stand der Technik vorgeschlagen wird, hat etliche Nachteile. Einer ist darin zu sehen, dass vergleichsweise dünne Filterflüssigkeiten von der durchströmenden Luft relativ leicht mitgenommen werden, so dass bereits nach relativ kurzer Einsatzzeit keine Flüssigkeit mehr auf dem Filter vorhanden ist. Weiterhin ist nachteilig, dass sich derartige Filterflüssigkeiten bereits nach vergleichsweise kurzer Einsatzzeit in ihrer Zusammensetzung oder Wirksamkeit ändern. Hierzu trägt auch bei, dass die bisher verwendeten Filterflüssigkeiten relativ gut mit den zu filternden Stoffen reagieren und insbesondere mittels der Filterflüssigkeit gebundene Schadstoffe vergleichsweise leicht freigegeben werden. Eine Bindung von Schadgasen, beispielsweise Benzin-Kohlenwasserstoffen, Schwefeldioxyd, Schwefelwasserstoffen usw., ist bei den bekannten Filterflüssigkeiten nicht zu erwarten. Schliesslich haben die bekannten Filterflüssigkeiten teilweise auch den Nachteil, dass sie für die Einnistung bzw. Vermehrung von Bakterien, die ja stets in einem Luftstrom vorhanden sind, ein günstiges Klima ergeben, wodurch die Gefahr besteht, dass einmal in ein Filter eingeschleppte Bakterien zu einer erheblichen Verunreinigung des gefilterten Raumes führen.

In der US-A-1.807.032 ist ein Gerät zur Entfernung von Pollen aus Luft beschrieben. Dabei wird als Filtermedium ein Faser-Material verwendet, welches an seiner Oberfläche klebrig gemacht werden soll. Dies wird dadurch erreicht, dass auf das Filtermedium Glyzerin, gegebenenfalls entsprechend verdünnt, in einer sehr dünnen Schicht aufgebracht wird, wobei durch das Aufsprühen des Glyzerins die Poren des Faser-Materials nicht verstopft werden sollen. Durch das Aufsprühen von Glyzerin wird dabei erreicht, dass Pollen nicht nur in dem Faser-Material hängen bleiben sondern zusätzlich auch an dessen Oberfläche haften. Wichtig bei dem bekannten Gerät ist, dass das Benetzungsmittel immer wieder aufgesprüht wird, um einerseits stets eine entsprechende Klebrigkeit zu gewährleisten, andererseits aber ein Verstopfen der Poren des Filtermediums zu verhindern. Ein derartiges Gerät ist als Filtervorrichtung nur sehr bedingt verwendbar, vor allem wegen der Notwendigkeit des Einbaues einer besonderen Zerstäubungseinrichtung für die Flüssigkeit zur Benetzung des Filter-Mediums.

Der Erfindung liegt somit die Aufgabe zugrunde, eine Filtervorrichtung zu schaffen, mit welcher Schadstoff-, Staub- bzw. andere Fremdstoffpartikel aus einem die Filtervorrichtung durchströmenden gasförmigen Strömungsmittel auf physikalischem Wege, d.h. durch Adhäsionskräfte, festgehalten und damit ausfiltriert werden, wobei der Strömungswiderstand durch die Filtervorrichtung hindurch vergleichsweise klein und auch nach einer relativ langen Einsatzdauer die physikalische Filterwirkung erhalten bleibt.

Diese Aufgabe wird erfindungsgemäss dadurch gelöst, dass in einem eine Einlassöffnung und eine Austrittsöffnung aufweisenden Gehäuse mehrere Filtereinrichtungen quer zur Strömungsrichtung des zu filternden Strömungsmittels hintereinander und voneinander beabstandet angeordnet sind, und dass die Substrate der Filtereinrichtungen Löcher aufweisen, wobei die Löcher benachbarter Filtereinrichtungen gegeneinander versetzt sind.

Durch die erfindungsgemässe Ausbildung der Filtervorrichtung, bei der mehrere Substrate hintereinander quer zur Strömungsrichtung angeordnet und die Löcher jeweils benachbarter, als Filtereinrichtung dienender Substrate gegeneinander versetzt sind, wird erreicht, dass das die Filtervorrichtung durchströmende Strömungsmittel zwischen den einzelnen Filtereinrichtungen mäanderförmig umgelenkt wird. Dabei kann das gasförmige Strömungsmittel die gegeneinander versetzten Löcher problemlos und quasi ohne Strömungswiderstand durchströmen. Schadstoffe, Staub bzw. andere mit dem gasförmigen Strömungsmittel in die Filtervorrichtung eingetragene Partikel bleiben jedoch infolge ihrer Massenträgheit an den Substraten der aufeinanderfolgenden Filtereinrichtungen bzw. an der das jeweilige Substrat benetzenden Filterflüssigkeit haften. Damit ergibt sich eine Filervorrichtung mit guten Filtereigenschaften, ohne dass der Strömungswiderstand durch die Filtereigenschaften nachträglich beeinträchtigt würde. Der Strömungswiderstand ist vergleichsweise klein und die physikalische Filterwirkung bleibt auch nach einer relativ langen Einsatzdauer der Filtervorrichtung erhalten. Die Filterflüssigkeit benetzt das Substrat oberflächlich, wodurch es möglich ist, dass das gasförmige Strömungsmittel an der Oberfläche des mit der Filterflüssigkeit benetzten Substrates mit geringem Strömungswiderstand vorbeiströmt und dass gleichzeitig die mit dem gasförmigen Strömungsmittel mitgeführten Schadstoff-, Staub- und anderen Fremdstoffpartikel durch die zwischen den Partikeln und der Filterflüssigkeit wirksamen Adhäsionskräfte an der Filterflüssigkeit haften bleiben. Die Gefahr einer Verstopfung des Substrates infolge der Anlagerung der Schadstoff-, Staub- bzw. anderer Fremdstoffpartikel ist äusserst gering. Die erfindungsgemässe Filtervorrichtung eignet sich deshalb nicht nur für Räume in Hotels, Kaufhäusern und dergleichen, sondern insbesondere auch zum Einsatz in Land-, Luft- bzw. Wasserfahrzeugen.

Vorteilhafterweise weist die Filterflüssigkeit als Hauptbestandteil Glyzerin und/oder Glykol auf und enthält zusätzlich $SiO_2$ und/oder $Al_2O_3$.

Bei Glyzerin handelt es sich um einen dreiwertigen Alkohol, der unter Normalbedingungen als farblose, sirupartige Flüssigkeit mit einem Siedepunkt von 290 °C vorliegt. Der Schmelzpunkt des Glyzerins liegt bei 18 °C. Unter den üblichen Bedingungen oxidiert Glyzerin nur sehr langsam, wobei sowohl die primäre als auch die sekundäre Hydroxylgruppe unter Bildung von Glyzerinaldehyd angegriffen werden. Glyzerin ist unter Normalbedingungen wenig reaktionsfreudig und völlig ungiftig. Da der Siedepunkt relativ hoch liegt, verdunstet es bei normalen Temperaturen nicht und steht somit über einen sehr langen Zeitraum in flüssiger Form zur Verfügung. Anstelle von Glyzerin bzw. mit Glyzerin vermischt kann auch Glykol verwendet werden, das grundsätzlich für die Zwecke der Erfindung entsprechende Eigenschaften aufweist. Dem Glyzerin und/oder Glykol können auch Zusätze von Tensiden und/oder fettlösender Mittel zugegeben werden. Zur Temperaturstabilisierung bzw. zur Erhöhung der Temperaturbeständigkeit können der Filterflüssigkeit ebenfalls geeignete Zusätze beigegeben werden. Ausserdem ist es möglich, Duftstoffe beizusetzen. Wesentlich ist jedoch, dass die Filterflüssigkeit auch $SiO_2$ und/oder $Al_2O_3$ enthält. Das Mischungsverhältnis dieser Oxide beträgt im Trokkenzustand vorzugsweise 84 % $SiO_2$ und 16 % $Ak_2O_3$. Selbstverständlich sind auch andere Mischungsverhältnisse möglich. Das Verhältnis von Glykol und/oder Glyzerin zu $SiO_2$ und/oder $Al_2O_3$ kann zwischen 100:1 und 1:1 liegen. Durch geeignete Auswahl dieses Verhältnisses kann die Viskosität der Filterflüssigkeit eingestellt werden.

Es ist auch möglich, dass die Filterflüssigkeit katalytisch wirkende Metalloxide enthält.

Ein grosser Anteil des Schwefeldioxids, des Stickstoffdioxids und anderer im Abgas eines Verbrennungsmotors vorhandener Gase ist an den Russ des Abgases gebunden. Dieser gebundene Gasanteil wird durch die in der erfindungsgemässen Filtervorrichtung stattfindende Partikelfilterung ausgefiltert. Unabhängig von der Partikelfilterung können mit der erfindungsgemässen Filtervorrichtung Kohlenmonoxid und andere Gase aus dem Abgas ausgefiltert werden.

Die erfindungsgemässe Filtervorrichtung ist also sehr gut als Abgasfilter in Kraftfahrzeugen verwendbar. Ein weiterer Vorteil der erfindungsgemässen Filtervorrichtung besteht in ihrer Verbesserung der Schalldämpfung, wenn eine derartige Filtervorrichtung hinter dem Endschalldämpfer eines Kraftfahrzeuges angeordnet ist.

Das Substrat für die Filterschicht der erfindungsgemässen Filtervorrichtung kann ein plattenförmiger gasdurchlässiger Schaumstoffkörper sein, der mit der die Filterschicht bildenden Flüssigkeit imprägniert oder getränkt ist. Der Schaumstoffkörper weist dabei eine derartige mittlere Porengrösse auf, dass der strömungswiderstand für das durchströmende gasförmige Strömungsmittel relativ gering ist. Andererseits ergibt sich durch die Imprägnierung bzw. Tränkung des Schaumstoffkörpers mit der die Filterschicht bildenden Flüssigkeit in der Weise, dass der Schaumstoffkörper an seiner gesamten, d.h. an seiner inneren und an seiner äusseren Oberfläche mit einer Flüssigkeitsschicht bedeckt ist, eine sehr gute physikalische Filterung der im gasförmigen Strömungsmittel befindlichen und mit dem gasförmigen Strömungsmittel durch das Schaumstoffsubstrat transportieren Schadstoff-, Staub- bzw. anderen Fremdstoffpartikel, so dass der Anteil derartiger Partikel an der Austrittsseite der Filtervorrichtung wesentlich kleiner ist als auf der Vorderseite des Substrates, d.h. auf der Eintrittsseite des gasförmigen Strömungsmittels.

Da ein gasdurchlässiges Substrat aus einem Schaumstoffkörper nicht sehr formstabil ist, hat es sich als vorteilhaft erwiesen, dass dem Substrat ein das gasförmige Strömungsmittel durchlassendes Versteifungselement zugeordnet ist. Bei diesem Versteifungselement kann es sich beispielsweise um ein grobmaschiges Drahtnetz handeln, das auf wenigstens einer Hauptfläche des Substrates vorgesehen ist. Selbstverständlich ist es auch möglich, das Versteifungselement auf beiden Seiten des Substrates vorzusehen bzw. zwischen zwei Substraten einzubetten.

Wird bei der erfindungsgemässen Filtervorrichtung ein Substrat aus einem Schaumstoffkörper angewandt, so hat es sich als vorteilhaft erwiesen, wenn der Schaumstoffkörper Durchgangslöcher aufweist, die sich von einer Hauptfläche zur gegenüberliegenden Hauptfläche des Schaumstoffkörpers erstrecken, und wenn gegebenenfalls das Versteifungselement mit den Durchgangslöchern des Schaumstoffkörpers entsprechenden und mit diesen fluchtenden Löchern versehen ist. Durch die Ausbildung des Schaumstoffkörpers mit Durchgangslöchern wird der Strömungswiderstand durch das Schaumstoffsubstrat hindurch erheblich reduziert, weil der Hauptanteil der Strömung des gasförmigen Strömungsmittels durch diese Durchgangslöcher hindurch erfolgt. Der Schaumstoffkörper selbst dient bei einer derartigen Filtervorrichtung primär zur Speicherung der Filterflüssigkeit. Die physikalische Filterwirkung ergibt sich bei einer solchen Filtervorrichtung dadurch, dass wohl das gasförmige Strömungsmittel durch die Durchgangslöcher hindurchströmen kann, dass jedoch die mit dem Strömungsmittel transportierten Partikel infolge ihrer relativ grossen Masse und damit infolge ihrer relativ grossen Trägheit an der Filterflüssigkeit und damit am Substrat festgehalten werden, weil sie nicht die einen kleinen Krümmungsradius aufweisenden Strömungsbahnen durch die Durchgangslöcher hindurch wie das gasförmige Strömungsmittel vollführen können. Zur Erzielung einer guten Filterwirkung ist es also vorteilhaft, wenn das gasförmige mit Partikeln beladene Strömungsmittel vor der Filtervorrichtung möglichst turbulent strömt. Bei dem Versteifungselement der oben beschriebenen Art kann es sich beispielsweise um einen Karton, um eine Schicht aus Kunststoff oder um ein dünnes Metallblech handeln, das mit den Durchgangslöchern des Schaumstoffsubstrates nach Grösse und Verteilung entsprechenden Durchgangslöchern versehen ist. Das Versteifungselement ist dazu vorgesehen, auch ein relativ dünnes Schaumstoffsubstrat in Form zu halten. Beispielsweise kann das Schaumstoffsubstrat platten- oder scheibenförmig ausgebildet sein und eine Dicke in der Grössenordnung von 5 mm aufweisen.

Das gasdurchlässige plattenförmige Substrat kann auch ein Gitternetzwerk oder eine Schaumkeramik sein. Von Wichtigkeit ist allein, dass das Substrat allseitig gut mit der Filterflüssigkeit benetzbar ist. Eine Schaumkeramik weist den Vorteil auf, dass sie auch bei einer geringen Wanddicke des Substrates eine gute Formstabilität aufweist. Ein Schaumkeramiksubstrat mit einer Dicke von grössenordnungsmässig 5 mm und einem mittleren Porendurchmesser zwischen 1 mm und 4 mm weist bei einem sehr geringen Gewicht des Substrates einen kleinen Strömungswiderstand und eine grosse spezifische Oberfläche, d.h. eine grosse mit Filterflüssigkeit benetzte Oberfläche und damit sehr gute Filtereigenschaften zur Ausfilterung von Schadstoffpartikeln, Staubpartikeln und anderen Fremdstoffpartikeln auf.

Bei einer ein Versteifungselement mit Durchgangslöchern aufweisenden Filtervorrichtung, wie sie weiter oben beschrieben worden ist, hat es sich als zweckmässig erwiesen, die Löcher des Versteifungselementes mit einem Bördelrand auszubilden, um das gasförmige Strömungsmittel vor der Filtervorrichtung zu verwirbeln und somit eine turbulente Strömung zu erzeugen, mit deren Hilfe die physikalische Filterung der Partikel verbessert wird.

Bei der Filtervorrichtung kann im Gehäuse quer zur Strömungsrichtung des zu filternden Strömungsmittels und von den die Filterflüssigkeit führenden Substraten beabstandet mindestens ein Aktivkohlefilter vorgesehen sein. Dieses Aktivkohlefilter kann beispielsweise ein Substrat aus einem gasdurchlässigen Schaumstoffkörper aufweisen, dessen Oberfläche mit einem Granulat aus Aktivkohlepuler oder mit faserförmiger Aktivkohle beschichtet bzw. imprägniert ist. Mit einem solchen Aktivkohlefilter ist eine Adsorption von gasförmigen Schadstoffen auf chemischem Wege möglich. Ein solches Aktivkohlefilter kann in bekannter Weise auch als Geruchsfilter benutzt werden.

Um die hintereinander und voneinander beabstandet angeordneten Substrate während des Betriebes der Filtervorrichtung mit einer frischen Filterflüssigkeit benetzten zu können, hat es sich als zweckmässig erwiesen, wenn im Gehäuse unter den Substraten ein Sammelraum für die Filterflüssigkeit und über den Substraten eine Berieselungseinrichtung für die Substrate vorgesehen ist, wobei die Berieselungseinrichtung mit dem Sammelraum mittels einer Rohrleitung verbunden ist, die zum Umwälzen der Filterflüssigkeit vom Sammelraum zur Berieselungseinrichtung eine Pumpe aufweist. Da die im Sammelraum unter den Substraten gesammelte Filterflüssigkeit die aus dem zu filternden gasförmigen Strömungsmittel ausgefilterten Schadstoff-, Staub- bzw. anderen Fremdstoffpartikel enthält, ist es vorteilhaft, wenn in der Rohrleitung zwischen dem Sammelraum und der Berieselungseinrichtung eine Regeneriereinrichtung vorgesehen ist, mit deren Hilfe die Partikel aus der Filterflüssigkeit ausgeschieden werden.

Im Strömungsweg der Filterflüssigkeit kann zwischen dem Sammelraum und der Berieselungseinrichtung ein Wärmetauscher vorgesehen sein. Bei diesem Wärmetauscher kann es sich beispielsweise um einen Erhitzer handeln, um die Filterflüssigkeit von einem kalten Betriebszustand schnell so weit aufzuwärmen, dass sie eine ausreichende Viskosität bekommt, um die Substrate der Filtervorrichtung gut zu benetzen. Bei dem im Strömungsweg der Filterflüssigkeit zwischen dem Sammelraum und der Berieselungseinrichtung vorgesehenen Wärmetauscher kann es sich jedoch auch um eine Kühleinrichtung handeln, mit deren Hilfe die Filterflüssigkeit so weit abgekühlt wird, dass sie nicht ungewollt zu sieden beginnt. Ein Wärmetauscher in Gestalt einer Kühleinrichtung ist insbesondere dann sinnvoll, wenn die erfindungsgemässe Filtervorrichtung im Auspuffsystem eines Fahrzeuges zur Anwendung gelangt, weil beispielsweise bei Kraftfahrzeugen das Auspuffgas Temperaturen erreichen kann, die über dem Siedepunkt der zur Anwendung gelangenden Filterflüssigkeit liegen.

Im Gehäuse der Filtervorrichtung kann stromabwärts nach der Einlassöffnung eine Verwirbelungseinrichtung für das zu filternde Strömungsmittel vorgesehen sein. Bei dieser Verwirbelungseinrichtung kann es sich um ortsfest angeordnete Drallschaufeln oder um eine bewegliche Einrichtung, beispielsweise in Gestalt eines Ventilators, handeln. Durch eine turbulente Strömung des zu filternden gasförmigen Strömungsmittels wird die Filterwirkung der Filtervorrichtung verbessert, weil die zu filternden Partikel infolge ihrer trägen Masse dann nicht dem Weg des gasförmigen quasi trägheitslosen Strömungsmittels folgen sondern infolge ihrer Masseträgheit gegen die Substrate gelenkt und an der diese benetzenden Filterflüssigkeit festgehalten werden. Durch die Verwirbelungseinrichtung kann demnach die Filterwirkung auf einfache Weise weiter verbessert werden.

Im Gehäuse der Filtervorrichtung kann stromabwärts hinter der letzten Filtereinrichtung und von ihr beabstandet stromaufwärts vor der Austrittsöffnung eine Auffangeinrichtung für mit dem Strömungsmittel mitgerissene Tröpfchen der Filterflüssigkeit vorgesehen sein. Durch diese Auffangeinrichtung werden die ungewollt die letzte Filtereinrichtung verlassenden Tröpfchen der Filterflüssigkeit im Gehäuse zurückgehalten. Dabei ist die Auffangeinrichtung derart gestaltet, dass durch sie der Strömungswiderstand durch die Filtervorrichtung hindurch für das gasförmige Strömungsmittel nur unmerklich erhöht wird. Die Auffangeinrichtung kann ein- oder mehrlagig ausgebildet sein. Eine einlagige Auffangeinrichtung ist beispielsweise als Gitternetzwerk ausreichender Dicke ausgebildet. Da bei einer einlagigen Auffangeinrichtung nicht mit Sicherheit gewährleistet ist, dass keine Tröpfchen der Filterflüssigkeit durch die Auffangeinrichtung ungewollt durchtreten, hat es sich als zweckmässig erwiesen, wenn die Auffangeinrichung mehrere Lagen aufweist, die quer zur Strömungsrichtung des gasförmigen Strömungsmittels voneinander beabstandet hintereinander angeordnet sind. Bei diesen Lagen der Auffangeinrichtung kann es sich um je ein Drahtgeflecht handeln. Diese Lagen der Auffangeinrichtung können wie die Substrate der Filtereinrichtungen ebenflächige Gebilde sein, die mit regelmässig verteilten Löchern ausgebildet sind, wobei die Löcher hintereinander benachbarter Lagen gegenseitig derart versetzt sind, dass sie sich nicht überlappen. Bei einer derartigen Ausbildung der Auffangeinrichtung durchströmt das gasförmige Strömungsmittel auch die einzelnen Lagen der Auffangeinrichtung entlang mäanderförmiger Bahnen, wodurch die wenigen noch mit dem gasförmigen Strömungsmittel mitgerissenen Tröpfchen der Filterflüssigkeit an den einzelnen Lagen der Auffangeinrichtung festgehalten werden.

Als besonders vorteilhaft hat es sich erwiesen, wenn die Auffangeinrichtung mehrere Lagen aus Lamellenelementen aufweist, wobei die Lamellenelemente einer Lage voneinander zur Ausbildung von Spalten beabstandet sind, und wenn die Lamellenelemente hintereinander benachbarter Lagen gegeneinander derart versetzt sind, dass die Spalte einer Lage durch Lamellenelemente der benachbarten Lage überdeckt sind. Dadurch ergibt sich eine vollständige Überdeckung der Lamellenelemente einer Lage mit den Spalten einer benachbarten Lage, wodurch der Durchlass für Tröpfchen der Filterflüssigkeit vernachlässigbar gering ist. Diese Lamellenelemente sind vorzugsweise rinnenförmig ausgebildet, wobei die konkave Innenseite der rinnenförmigen Lamellenelemente der Strömungsrichtung des gasförmigen Strömungsmittels zugewandt ist. Durch die rinnenförmige Ausbildung der Lamellenelemente ergeben sich gute Sammeleigenschaften der Auffangeinrichtung. Bei einer einfacheren Ausbildung wäre es selbstverständlich auch möglich, die Lamellenelemente einfach eben auszubilden, wobei durch eine solche ebene Ausbildung der Lamellenelemente jedoch die Gefahr besteht, dass Tröpfchen der Filterflüssigkeit an den Lamellenelementen reflektiert und durch die Auffangeinrichtung durchgeleitet werden.

Um auch die restlichen, durch die Auffangeinrichtung eventuell durchströmenden Tröpfchen der Filterflüssigkeit noch durch die Austrittsöffnung der Filtervorrichtung austreten zu lassen, ist im Gehäuse der Filtervorrichtung vorzugsweise zwischen der Auffangeinrichtung eine Prallkappe vorgesehen. Diese Prallkappe weist grösse Querschnittsabmessungen auf als die Austrittsöffnung, so dass die Prallkappe die Austrittsöffnung überdeckt. Die Prallkappe weist von der Austrittsöffnung einen bestimmten Abstand auf, so dass das gasfförmige Strömungsmittel an der Prallkappe vorbei durch die Austrittsöffnung aus dem Gehäuse ausströmen kann.

Nachdem nicht nur die einzelnen Substrate mit der Filterflüssigkeit benetzt sind, sondern weil auch die Auffangeinrichtung ungewollt mit Tröpfchen der Filterflüssigkeit benetzt sein kann, die von dem gasförmigen Strömungsmittel von den Substraten zur Auffangeinrichtung mitgerissen werden, bzw. weil auch einige wenige Tröpfchen der Filterflüssigkeit bis zur vor der Austrittsöffnung der Filtervorrichtung vorgesehenen Prallkappe geleitet werden können, erstreckt sich der unter den Substraten vorgesehene Sammelraum vorzugsweise bis unter die Auffangeinrichtung und bis unter die Prallkappe. Dadurch kann im Sammelraum die gesamte in der Filtervorrichtung umströmende Filterflüssigkeit gesammelt und gegebenenfalls regeneriert werden sowie im Strömungsweg der Filterflüssigkeit zirkulieren.

Das Gehäuse der Filtervorrichtung kann in seinem Inneren mit Führungselementen für die Substrate ausgebildet sein. Dadurch ist es möglich, verbrauchte bzw. beschädigte Substrate gegebenenfalls durch neue Substrate zu ersetzen. Zu diesem Zewck werden die verbrauchten bzw. beschädigten Substrate entlang den Führungselementen aus dem Gehäuse herausgeschoben und entsprechend neue Substrate anschliessend in das Gehäuse eingeschoben. Die Substrate weisen beispielsweise viereckige, mehreckige, runde, ovale oder eine beliebige andere Grundflächengestalt auf. Die Substrate können im Gehäuse annähernd lotrecht angeordnet sein. Bei einer bevorzugten Ausbildung der Filtervorrichtung sind die Substrate und gegebenenfalls die Auffangeinrichtung im Gehäuse gegen die Lotrechte und im Bezug zur durch die Einlassöffnung gegebenen Strömungsrichtung des Strömungsmittels von vorne oben nach hinten unten geneigt angeordnet. Der Neigungswinkel der Substrate und gegebenenfalls der Auffangeinrichtung kann an die Richtung der Resultierenden des Geschwindigkeitsvektors des gasförmigen Strömungsmittels und der durch die Gravitation und durch die Zwangsumwälzung der Filterflüssigkeit bedingten Strömungsgeschwindigkeit der Filterflüssigkeit entlang der Substrate angepasst sein.

Wenn die erfindungsgemässe Filtervorrichtung neben den Substraten ausserdem mit einer Auffangeinrichtung der weiter oben beschriebenen Art ausgebildet ist, ist die Auffangeinrichtung vorzugsweise zu den Substraten der Filtereinrichtungen annähernd parallel ausgerichtet.

Die erfindungsgemässe Filtervorrichtung weist einen hohen Filterwirkungsgrad auf, so dass sie sich auch als Zusatzfilter für Dieselfahrzeuge eignet. Zu diesem Zweck wird die Filtervorrichtung vorzugsweise hinter dem letzten Auspuff des Auspuffsystems des Dieselfahrzeuges angeordnet. Bei einem solchen Dieselfahrzeug kann es sich um ein Landfahrzeug wie einen Personenkraftwagen oder einen Lastkraftwagen handeln, oder um ein Schiff mit einem Schiffsdieselaggregat. Die Filtervorrichtung ist in vorteilhafter Weise auch für die Industrie-Abgasreinigung, für die Kaminentrussung, sowie für die Entstaubung von Industrieanlagen gut geeignet. Aufgrund ihrer langen Standzeit ist die erfindungsgemässe Filtervorrichtung beispielsweise auch für Umluftheizungen u.dgl. gut geeignet. Die Investitions- und Betriebskosten der Filtervorrichtung sowie ihr Platzbedarf sind vergleichsweise niedrig.

Weitere Einzelheiten, Merkmale und Vorteile ergeben sich aus der nachfolgenden Beschreibung zweier in der Zeichnung schematisch dargestellter Ausführungsbeispiele der erfindungsgemässen Filtervorrichtung. Es zeigt:

Figur 1 einen Längsschnitt durch eine erste Ausführungsform der Filtervorrichtung,

Figur 2 einen Längsschnitt durch eine zweite Ausführungsform der Filtervorrichtung,

Figur 3 einen Schnitt entlang der Schnittlinie III-111 aus Figur 2,

Figur 4 einen Schnitt entlang der Schnittlinie IV-IV aus Figur 2 durch zwei der in Figur 2 dargestellten vier Lagen der Auffangeinrichtung,

Figur 5 einen Längsschnitt durch eine Filtereinrichtung mit einem plattenförmigen Schaumstoffkörper, der mit Durchgangslöchern ausgebildet ist,

Figur 6 einen Abschnitt einer Filtereinrichtung gemäss Figur 5 in Blickrichtung von oben,

Figur 7      zwei hintereinander angeordnete und voneinander beabstandete abschnittweise dargestellte Filtereinrichtungen gemäss Figur 5, wie sie in einer Filtervorrichtung gemäss Figur 1 zur Anwendung gelangen,

Figur 8      einen Schnitt durch zwei Filtereinrichtungen, wie sie in der Filtervorrichtung gemäss Figur 2 zum Einsatz gelangen,

Figur 9      eine Ansicht der abschnittweise dargestellten Filtereinrichtungen in Blickrichtung des Pfeiles IX gemäss Figur 8, und

Figur 10      einen Abschnitt des in einem grösseren Maßstab dargestellten Versteifungselementes, wie es bei einer Filtereinrichtung gemäss den Figuren 2, 8 und 9 zur Verwendung kommt.

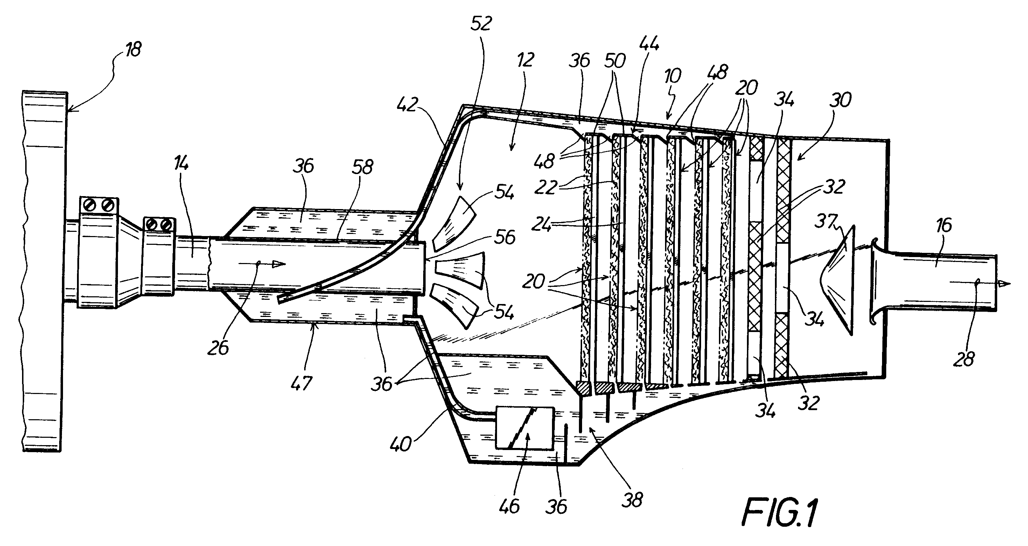

Figur 1 zeigt eine Filtervorrichtung 10 mit einem Gehäuse 12, das eine Einlassöffnung 14 und eine Austrittsöffnung 16 aufweist.Die Filtervorrichtung 10 ist an den Endschalldämpfer eines Fahrzeugs angeschlossen. Der Endschalldämpfer 18 ist abschnittweise dargestellt. Im Gehäuse 12 der Filtervorrichtung 10 sind Filtereinrichtungen 20 hintereinander und voneinander beabstandet angeordnet. Bei der in Fig. 1 dargestellten Filtervorrichtung 10 sind die Filtereinrichtungen 20 mindestens annähernd lotrecht ausgerichtet. Jede Filtereinrichtung 20 weist ein gasdurchlässiges Substrat 22 auf, bei dem es sich um einen Schaumstoffkörper, um ein Gitternetzwerk oder um eine Schaumkeramik handeln kann. Jedem gasdurchlässigen Substrat 22 ist ein Versteifungselement 24 zugeordnet. Das Versteifungselement 24 kann als Drahtgitter, als mit Löchern ausgebildete Kunststoffschicht oder als mit Löchern ausgebildetes Metallblech ausgebildet sein. Das gasdurchlässige Substrat 22 und das Versteifungselement 24 einer Filtereinrichtung 20 sind üblicherweise miteinander fest verbunden, wodurch nicht nur die Lagerhaltung und die Montage der Filtereinrichtungen 20 vereinfacht wird, sondern auch der gegebenenfalls erforderlich werdende Ersatz einer verbrauchten bzw. beschädigten Filtereinrichtung 20 durch eine neue Filtereinrichtung 20. Die Filtereinrichtungen 20 sind plattenförmig ausgebildet und sie weisen eine viereckige, mehreckige, runde oder ovale Grundflächengestalt auf.

Zusätzlich zu den Filtereinrichtungen 20 können plattenförmige Aktivkohlefilter vorgesehen sein. Derartige Aktivkohlefilter können ebenfalls ein Substrat aus einem Schaumstoffkörper aufweisen.

In Strömungsrichtung des gasförmigen Strömungsmittels, die durch die Pfeile 26 und 28 angedeutet ist, stromabwärts und von der letzten Filtereinrichtung 20 beabstandet ist eine Auffangeinrichtung 30 im Gehäuse 12 der Filtervorrichtung 10 angeordnet. In Figur 1 ist eine zweilagige Auffangeinrichtung schematisch dargestellt, bei der jede Lage aus einem Gitternetzwerk 32 ist. Jedes Gitternetzwerk 32 weist Durchgangslöcher 34 auf. Die voneinander beabstandeten Gitternetzwerklagen sind im Gehäuse 12 der Filtervorrichtung 10 derart angeordnet, dass die Durchgangslöcher 34 benachbarter Gitternetzwerklagen 32 gegeneinander versetzt sind. Die Versetzung der Durchgangslöcher 34 ist dabei derart, dass das Gitternetzwerk 32 einer Lage die Durchgangslöcher 34 der benachbarten Lage vollständig überdeckt. Dadurch wird das gasförmige Strömungsmittel durch die Gitternetzwerklagen 32 mäanderförmig durchgeleitet und werden die mit dem gasförmigen Strömungsmittel ungewollt mitgerissenen Tröpfchen der Filterflüssigkeit 36 infolge ihrer Masseträgheit gegen die Gitternetzwerke 32 gelenkt und durch die Gitternetzwerke 32 daran gehindert, durch die Auffangeinrichtung 30 durchzuströmen. Um die dennoch durch die Auffangeinrichtung 30 durchtretenden Tröpfchen der Filterflüssigkeit 36 sicher daran zu hindern, dass sie durch die Austrittsöffnung 16 der Filtervorrichtung 10 ins Freie austreten, ist stromaufwärts vor der Austrittsöffnung 16 der Filtervorrichtung 10 eine Prallkappe 37 vorgesehen.

Die Filtervorrichtung 10 weist im Gehäuse 12 unter den Filtereinrichtungen 20 einen Sammelraum 38 für die Filterflüssigkeit 36 auf, der sich bis unter die Auffangeinrichtung 30 und bis unter die Prallkappe 37 erstreckt. Der Sammelraum 38 ist über eine Rohrleitung 40 und 42 mit einer Berieselungseinrichtung 44 fluidisch verbunden. Zwischen der Rohrleitung 40 und der Rohrleitung 42 ist ein Wärmetauscher 47 vorgesehen. Bei dem in Figur 1 dargestellten Wärmetauscher handelt es sich um eine Vorrichtung zum Erwärmen der Filterflüssigkeit 36. Dabei wird die Wärme des gasförmigen Strömungsmittels zur Erwärmung der Filterflüssigkeit 36 benutzt. Um die Filterflüssigkeit 36 zwischen dem Sammelraum 38 und der Berieselungseinrichtung 44 und von der Berieselungseinrichtung 44 über die Filtereinrichtungen 20 zum Sammelraum 38 zurückzuleiten, ist in diesem Strömungsweg der Filterflüssigkeit eine Pumpe 46 vorgesehen.

Die Berieselungseinrichtung 44 weist Öffnungen 48 auf, die sich über die Querabmessung der gasdurchlässigen Substrate 22 erstrekken. Durch die Öffnungen 48 fliesst die Filterflüssigkeit 36 zu den gasdurchlässigen Substraten 22 und benetzt diese vollständig. In der Nachbarschaft der Öffnungen 48 sind Führungseinrichtungen 50 vorgesehen, die zum Führen und Festhalten der Filtereinrichtungen 20 dienen.

Eine Verwirbelungseinrichtung 52 ist stromabwärts von der Einlassöffnung 14 im Inneren des Gehäuses 12 der Filtervorrichtung 10 vorgesehen. Die Verwirbelungseinrichtung weist Ablenkflügel 54 auf, die die Öffnung 56 des Rohres 58 teilweise überlappen. Durch die Verwirbelungseinrichtung 52 wird das durch den Pfeil 26 angedeutete gasförmige Strömungsmittel im Gehäuse 12 der Filtervorrichtung verwirbelt, so dass das gasförmige und mit Partikeln beaufschlagte Strömungsmittel in einer turbulenten Strömung durch die Filtereinrichtungen 20 hindurchgeleitet wird. Durch die turbulente Strömung werden die Partikel an der die gasdurchlässigen Substrate 22 benetzenden Filterflüssigkeit 36 festgehalten, während das gasförmige Strömungsmittel die Filtereinrichtungen durchströmt. Da bei einer ausreichend hohen Strömungsgeschwindigkeit einige Tröpfchen der Filterflüssigkeit 36 hinter der letzten Filtereinrichtung 20 mitgerissen werden, ist zum Auffangen dieser Tröpfchen die Auffangeinrichtung 30 bzw. zum Verhindern eines Austrittes einiger Tröpfchen durch die Austrittsöffnung 16 die Prallkappe 37 vorgesehen.

In Figur 1 ist die Pumpe 46 als Tauchpumpe dargestellt, die im Sammelraum 38 angeordnet ist. Selbstverständlich ist es auch möglich, die Pumpe 46 ausserhalb desGehäuses 12 anzuordnen. Desgleichen kann der Wärmetauscher 47 als Kühler ausgebildet sein. Die Verwendung eines Kühlers oder eines Erhitzers hängt von den Betriebsbedingungen und von der in der Filtervorrichtung 10 zum Einsatz gelangenden Filterflüssigkeit 36 ab.

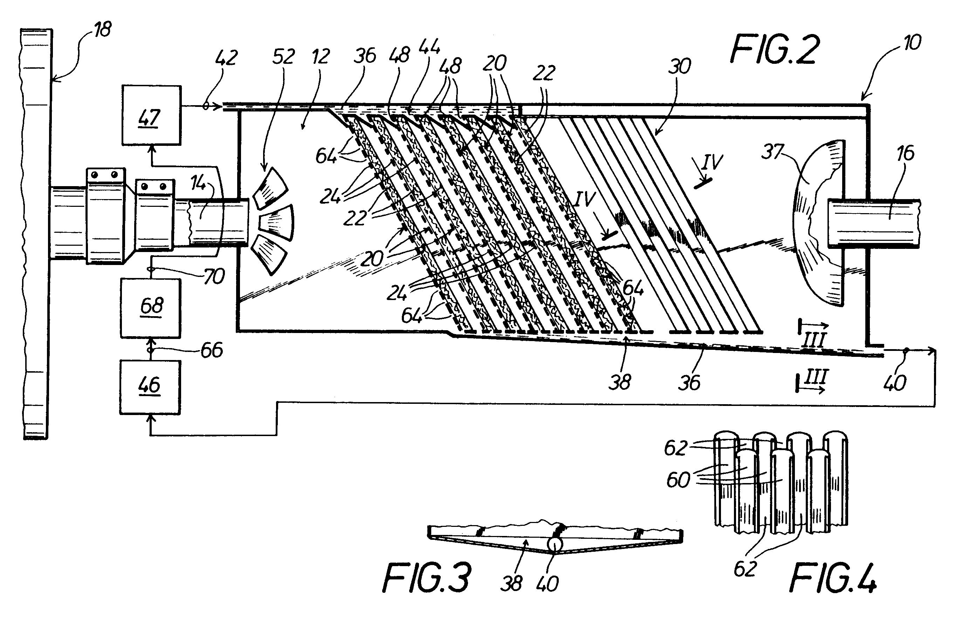

Figur 2 zeigt eine zweite Ausführungsform der Filtervorrichtung 10 mit einem Gehäuse 12. Das Gehäuse 12 weist eine Einlassöffnung 14 und eine Austrittsöffnung 16 auf. Die Filtervorrichtung 10 ist mit ihrer Einlassöffnung 14 an einen abschnittweise dargestellten Endschalldämpfer 18 dicht angeschlossen. Im Inneren des Gehäuses 12 der Filtervorrichtung 10 sind Filtereinrichtungen 22 schrägstehend angeordnet. Jede Filtereinrichtung 20 weist ein gasdurchlässiges Substrat 22 und ein dem Substrat 22 zugeordnetes Versteifungselement 24 auf. Im Unterschied zur Filtervorrichtung 10 gemäss Figur 1 sind bei der Filtervorrichtung 10 gemäss Figur 2 die Versteifungselemente 24 stromaufwärts vor dem gasdurchlässigen Substrat 22 vorgesehen.

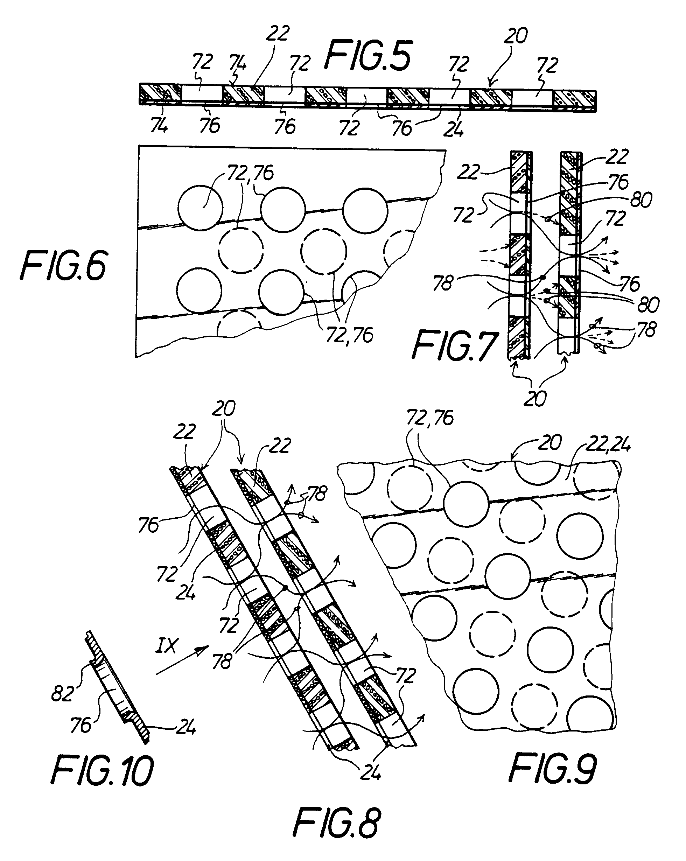

Stromabwärts hinter den Filtereinrichtungen 20 ist im Gehäuse 12 der Filtervorrichtung 10 eine Auffangeinrichtung 30 angeordnet. Die Auffangeinrichtung 30 weist mehrere Lagen aus Lamellenelementen 60 auf, wobei zwei Lagen Lamellenelemente 60 in Figur 4 verdeutlicht sind. Die Lamellenelemente 60 sind im Gehäuse 12 vertikal angeordnet. Wie aus Figur 4 ersichtlich ist, sind die Lamellenelemente 60 einer Lage voneinander beabstandet, so dass zwischen den einzelnen Lamellenelementen 60 Spalte 62 gebildet sind. Die Lamellenelemente 60 hintereinander benachbarter und voneinander beabstandeter Lagen sind gegeneinander seitlich derart versetzt, dass die Lamellenelemente 60 einer Lage die Spalte 62 einer benachbarten Lage überdecken. Auf diese Weise wird das gasförmige Strömungsmittel zwischen den Lamellenelementlagen durch die Spalte 62 mäanderförmig hindurchgeleitet, während die die letzte Filtereinrichtung 20 möglicherweise verlassenden Tröpfchen der Filterflüssigkeit 36 infolge ihrer Masseträgheit den mäanderförmigen Strömungspfaden des quasi trägheitslosen gasförmigen Strömungsmittels nicht folgen und durch die Lamellenelemente 60 zurückgehalten werden. Wie aus Figur 4 deutlich ersichtlich ist, sind die Lamellenelemente 60 rinnenförmig ausgebildet, wobei die konkave Innenfläche der rinnenförmigen Lamellenelemente 60 der Strömung des gasförmigen Strömungsmittels zugewandt ist.

Stromabwärts hinter der Auffangeinrichtung ist eine von der Austrittsöffnung 16 beabstandeten Prallkappe 37 vorgesehen, durch die möglicherweise die Auffangeinrichtung 30 noch verlassende Tröpfchen der Filterflüssigkeit 36 daran gehindert werden, durch die Austrittsöffnung 16 die Filtervorrichtung 10 zu verlassen.

Die Substrate 22 der voneinander beabstandeten und zueinander parallel ausgerichteten Filtereinrichtungen 20 können gasdurchlässige Schaumstoffkörper, Gitternetzwerke oder Platten aus einer Schaumkeramik sein. Die Substrate können mit oder ohne Durchgangslöcher ausgebildet sein. Die zu den Substraten 22 zugeordneten Versteifungselemente 24 sind bei der in Figur 2 dargestellten Ausführungsform der Filtervorrichtung 10 als Bleche ausgebildet, die mit Löchern 64 ausgebildet sind. Die Filtereinrichtungen 20 sind an der Oberseite der Filtervorrichtung 10 fluidisch mit einer Berieselungseinrichtung 44 verbunden, die Öffnungen 48 aufweisen. Durch die Öffnungen 48 der Berieselungseinrichtung 44 fliesst die Filterflüssigkeit 36 zu den Substraten 22 der Filtereinrichtung 20 und benetzt diese vollständig. Die überschüssige Filterflüssigkeit 36 wird an der Unterseite der Filtereinrichtungen 20 gesammelt. Dazu dient ein Sammelraum 38, der unter den Filtereinrichtungen 20 vorgesehen ist, und der sich bis unter die Auffangeinrichtung 30 und unter die Prallkappe 37 erstreckt. Wie aus Figur 3 ersichtlich ist, ist der Sammelraum 38 rinnenförmig ausgebildet, um die Filterflüssigkeit 36 allseitig sammeln zu können. Der Sammelraum 38 ist über eine Rohrleitung 40 mit einem Wärmetauscher 47 verbunden.Der Wärmetauscher 47 ist über eine Rohrleitung 66 mit einem Vorratsbehälter 68 für Filterflüssigkeit 36 fluidisch verbunden. Der Vorratsbehälter 68 ist mittels einer Rohrleitung 70 mit einer Pumpe 46 verbunden. Die Pumpe 46 ist mittels einer Rohrleitung 42 mit der Berieselungseinrichtung 44 fluidisch verbunden. DieRohrleitungen 40, 66, 70 und 42 sowie der Wärmetauscher 47, der Vorratsbehälter 68 und die Pumpe 46 sind in Figur 2 nur schematisch durch Pfeile bzw. durch Blöcke angedeutet.

Stromabwärts von der Einlassöffnugn 14 ist im Gehäuse 12 eine Verwirbelungseinrichtung 52 vorgesehen, mit deren Hilfe das in die Filtervorrichtung 10 eintretende gasförmige Strömungsmittel verwirbelt wird. Das turbulent strömende gasförmige Strömungsmittel, das mit Partikeln beladen ist, durchdringt die gasdurchlässigen Substrate 22 der Filtereinrichtungen 20, wobei die Partikel infolge ihrer Masseträgheit an der die Substrate 22 benetzenden Filterflüssigkeit 36 haften bleiben, während das gasförmige Strömungsmittel durch die Filtereinrichtungen 20 mit geringem Strömungswiderstand durchtreten kann. Die möglicherweise mit dem gasförmigen Strömungsmittel nach der letzten Filtereinrichtung 20 mitgerissenen Tröpfchen der Filterflüssigkeit 36 werden an der Auffangeinrichtung 30 aufgefangen.Für den Fall, dass einige Tröpfchen der Filterflüssigkeit 36 auch die Auffangeinrichtung 30 durchdringen, ist zur Verhinderung einer Durchströmung dieser Tröpfchen durch die Austrittsöffnung 16 stromaufwärts vor der Austrittsöffnung 16 die Prallkappe 37 für diese Flüssigkeitströpfchen vorgesehen.

Wie bereits erwähnt wurde, können die einzelnen gasdurchlässigen Substrate 22 der Filtereinrichtungen 20, die mit der Filterflüssigkeit 36 benetzt sind, mit oder ohne Durchgangslöcher ausgebildet sein. In Figur 5 ist eine Filtereinrichtung 20 dargestellt, bei der das gasdurchlässige Substrat 22 mit Durchgangslöchern 72 ausgebildet ist, die sich von einer Hauptfläche 74 zur gegenüberliegenden Hauptfläche 74 des gasdurchlässigen Substrates 22 erstrecken. Mit dem gasdurchlässigen Substrat 22, bei dem es sich beispielsweise um einen Schaumstoffkörper handelt, ist ein Versteifungselement 24 verbunden, bei dem es sich um eine Pappe, um eine Kunststoffschicht oder um ein dünnes Metallblech handeln kann. Das Versteifungselement 24 ist wie das gasdurchlässige Substrat 22 mit Durchgangslöchern 76 ausgebildet, wobei die Durchgangslöcher 76 bezüglich Grösse und Verteilung den Durchgangslöcheren 72 des gasdurchlässigen Substrates 22 entsprechen. Das Versteifungselement 24 einer derartigen Filtereinrichtung 20 dient dazu, das nachgiebige gasdurchlässige Substrat zu versteifen, um die Filtereinrichtung 20 besser handhabbar zu machen. Durch die miteinander fluchtenden Durchgangslöcher 72 und 76 ergibt sich eine Filtereinrichtung 20, die einen kleinen Strömungswiderstand aufweist. Da das gasförmige mit Partikeln beladene Strömungsmittel bei jeder beliebigen Anströmung der Filtereinrichtung 20 im Bereich der Durchgangsöffnungen 72 eingeschnürt bzw. verwirbelt wird, fliegen die mit dem gasförmigen Strömungsmittel transportierten Partikel infolge ihrer grösseren Masseträgheit auf wesentlich grösser gekrümmten Bahnen als das gasförmige Strömungsmittel, so dass die Partikel gegen das gasdurchlässige Substrat 22 bewegt werden und von der das Substrat 22 benetzenden Filterflüssigkeit festgehalten werden.

Bei mit Durchgangslöchern 72 bzw. 76 ausgebildeten Substraten 22 werden hintereinander benachbarte und voneinander beabstandete Filtereinrichtugnen 20 in der Filtervorrichtung 10 (sh. Figur 1 bzw. Figur 2) derart angeordnet, dass die Durchgangslöcher 72,76 einer Filtereinrichtung 20 gegen die Durchgangslöcher 72, 76 der benachbarten Filtereinrichtung 20 versetzt sind. In Figur 7 sind zwei Filtereinrichtungen 20 abschnittweise dargestellt, wobei aus dieser Figur die Versetzung der Durchgangslöcher 72, 76 voneinander beabstandeter benachbarter Filtereinrichtungen 20 deutlich wird. Durch die versetzten Durchgangslöcher 72, 76 benachbarter Filtereinrichtungen 20 strömt das gasförmige Strömungsmittel,das durch die Pfeile 78 angedeutet ist, mit einem geringen Strömungswiderstand mäanderförmig hindurch. Die mit dem gasförmigen Strömungsmittel gemäss Pfeil 78 transportierten Partikel beschreiben infolge ihrer im Vergleich zum gasförmigen Strömungsmittel grossen Masseträgheit Flugbahnen mit einem entsprechend grösseren Krümmungsradius. Die Flugbahnen der Partikel sind in Figur 7 durch die strichlierten Pfeile 80 angedeutet. Während das gasförmige Strömungsmittel entsprechend den Pfeilen 78 also grösstenteils mit geringem Strömungswiderstand durch die Durchgangslöcher 72,76 durchgeleitet wird, treffen die aus dem gasförmigen Strömungsmittel auszufilternden Partikel auf den Substraten 22 der Filtereinrichtungen 20 auf und werden dort durch die Substrate 22 benetzende Filterflüssigkeit festgehalten. Somit ergibt sich eine Filtervorrichtung geringen Strömungswiderstandes und mit einer guten Filterwirkung für Partikel jeder Art.

Figur 8 zeigt abschnittweise zwei Filtereinrichtungen 20, wie sie in der Filtervorrichtung 10 gemäss Figur 2 zur Anwendung kommen. Jede Filtereinrichtung 20 weist ein gasdurchlässiges Substrat 22 auf, dem ein Versteifungselement 24 zugeordnet ist. Das Versteifungselement 24 ist blechförmig ausgebildet und weist Durchgangslöcher 76 auf. Mit den Durchgangslöchern 76 des Versteifungselementes 24 fluchten Durchgangslöcher 72, die im gasdurchlässigen Substrat 22 vorgesehen sind. Bei dem gasdurchlässigenSubstrat 22 handelt es sich beispielsweise um einen Schaumstoffkörper, ein Gitternetzwerk, eine Schaumkeramik o.dgl. Die Substrate 22 der Filtereinrichtungen 20 sind mit einer (nicht dargestellten) Filterflüssigkeit benetzt, getränkt bzw. imprägniert. Hintereinander angeordnete und voneinander beabstandete Filtereinrichtungen 20 sind gegeneinander derart versetzt angeordnet, dass das gasförmige Strömungsmittel durch die Filtereinrichtungen 20, d.h. durch die Durchgangslöcher 76, 72 der hintereinander angeordneten Filtereinrichtungen 20 mäanderförmig durchströmt. Die Strömung des gasförmigen Strömungsmittels ist auch in dieser Figur durch die Pfeile 78 angedeutet. Die versetzte Anordnung der Durchgangslöcher 76, 72 voneinander beabstandeter, hintereinander angeordneter Filtereinrichtungen 20 ist aus Figur 9 ersichtlich.

Um die Verwirbelung des gasförmigen Strömungsmittels während des Durchströmens der Filtereinrichtungen 20 weiter zu verbessern, sind die Durchgangslöcher 76 des Versteifungselementes 24 mit einem der Strömungsrichtung zugewandten aufgebördelten Rand 82 ausgebildet. Um die aus dem gasförmigen Strömungsmittel auszufilternden Partikel nicht nur an der Wandung der Durchgangslöcher 72 der Substrate 22 und an der freien Rückseite der Substrate 22 anzulagern, sondern auch an der der Strömung zugewandten Vorderseite der Substrate, können die vorderseitig angeordneten Versteifungselemente 24 ausser den Durchgangslöchern 76 noch zusätzlich Löcher aufweisen.

**Patentansprüche**

1. Filtervorrichtung, umfassend mindestens eine Filtereinrichtung zur Filterung von Schadstoff-, Staub- bzw. anderer Fremdstoffpartikel aus einem gasförmigen Strömungsmittel, mit einem Substrat (22) und einer das Substrat (22) benetzenden Filterflüssigkeit (36) **dadurch gekennzeichnet,** dass in einem eine Einlassöffnung (14) und eine Austrittsöffnung (16) aufweisenden Gehäuse (12) mehrere Filtereinrichtungen (20) quer zur Strömungsrichtung des zu filternden Strömungsmittels hintereinander und voneinander beabstandet angeordnet sind, und dass die Substrate (22) der Filtereinrichtungen (20) Löcher (72) aufweisen, wobei die Löcher (72) benachbarter Filtereinrichtungen (20) gegeneinander versetzt sind.

2. Filtervorrichtung nach Anspruch 1, **dadurch gekennzeichnet,** dass die Filterflüssigkeit als Hauptbestandteil Glycerin und/oder Glykol aufweist und zusätzlich $SiO_2$ und/oder $Al_2O_3$ enthält.

3. Filtervorrichtung nach Anspruch 1 oder 2, **dadurch gekennzeichnet,** dass die Filterflüssigkeit katalytisch wirkende Metalloxide enthält.

4. Filtervorrichtung nach einem der Ansprüche 1 bis 3, **dadurch gekennzeichnet,** dass das Substrat (22) ein plattenförmiger, gasdurchlässiger Schaumstoffkörper ist, der mit der die Filterschicht bildenden Flüssigkeit (36) imprägniert oder getränkt ist.

5. Filtervorrichtung nach Anspruch 4, **dadurch gekennzeichnet,** dass dem Substrat (22) ein das gasförmige Strömungsmittel durchlassendes Versteifungselement (24) zugeordnet ist.

6. Filtervorrichtung nach Anspruch 4 oder 5, **dadurch gekennzeichnet,** dass der Schaumstoffkörper (22) Durchgangslöcher (72) aufweist, die sich von einer Hauptfläche (74) zur gegenüberliegenden Hauptfläche (74) des Schaumstoffkörpers (22) erstrekken, und dass gegebenenfalls das Versteifungselement (24) mit den Durchgangslöchern (72) des Schaumstoffkörpers (22) entsprechenden und mit diesen fluchtenden Löchern (76) versehen ist.

7. Filtervorrichtung nach einem der Ansprüche 1 bis 4, **dadurch gekennzeichnet,** dass das Substrat (22) eine Platte aus Gitternetzwerk oder einer Schaumkeramik ist.

8. Filtervorrichtung nach einem der Ansprüche 1 bis 7, **dadurch gekennzeichnet,** dass im Gehäuse (12) unter den Substraten (22) ein Sammelraum (38) für die Filterflüssigkeit (36) und über den Substraten (22) eine Berieselungseinrichtung (44) für die Substrate (22) vorgesehen ist, wobei die Berieselungseinrichtung (44) mit dem Sammelraum (38) mittels einer Rohrleitung (40, 42 bzw. 40, 66, 70, 42) verbunden ist, die zum Umwälzen der Filterflüssigkeit (36) vom Sammelraum (38) zur Berieselungseinrichtung (44) eine Pumpe (46) aufweist.

9. Filtervorrichtung nach Anspruch 8, **dadurch gekennzeichnet,** dass im Strömungsweg der Filterflüssigkeit (36) zwischen dem Sammelraum (38) und der Berieselungseinrichtung (44) ein Wärmetauscher (47) vorgesehen ist.

10. Filtervorrichtung nach Anspruch 9, **dadurch gekennzeichnet,**

dass im Gehäuse (12) stromabwärts nach der Einlassöffnung (14) eine Verwirbelungseinrichtung (52) für das zu filternde Strömungsmittel vorgesehen ist.

11. Filtervorrichtung nach einem der Ansprüche 1 bis 10,
**dadurch gekennzeichnet,**
dass im Gehäuse (12) stromabwärts hinter der letzten Filtereinrichtung (20) und von ihr beabstandet stromaufwärts vor der Austrittsöffnung (16) eine Auffangeinrichtung (30) für mit dem Strömungsmittel mitgerissene Tröpfchen der Filterflüssigkeit (36) vorgesehen ist.

12. Filtervorrichtung nach Anspruch 11,
**dadurch gekennzeichnet,**
dass die Auffangeinrichtung (30) mehrere Lagen aus Lamellenelementen (60) aufweist, wobei die Lamellenelemente (60) einer Lage voneinander zur Ausbildung von Spalten (62) beabstandet sind und die Lamellenelemente (60) hintereinander benachbarter Lagen gegeneinander derart versetzt sind, dass die Spalte (62) einer Lage durch Lamellenelemente (60) der benachbarten Lage verdeckt sind.

13. Filtervorrichtung nach Anspruch 12,
**dadurch gekennzeichnet,**
dass die Lamellenelemente (60) rinnenförmig ausgebildet sind, wobei die konkave Innenseite der Lamellenelemente (60) der Strömungsrichtung des Strömungsmittels zugewandt ist.

14. Filtervorrichtung nach einem der Ansprüche 11 bis 13,
**dadurch gekennzeichnet,**
dass im Gehäuse (12) zwischen der Auffangeinrichtung (30) und der Austrittsöffnung (16) in der Nachbarschaft der Austrittsöffnung (16) eine Prallkappe (37) vorgesehen ist.

15. Filtervorrichtung nach einem der Ansprüche 1 bis 14,
**dadurch gekennzeichnet,**
dass die Substrate (22) und gegebenenfalls die Auffangeinrichtung (30) im Gehäuse (12) gegen die Lotrechte und in Bezug zur durch die Einlassöffnung (14) gegebenen Strömungsrichtung des gasförmigen Strömungsmittels von vorne oben nach hinten unten geneigt angeordnet sind.

## Claims

1. A filtering apparatus, comprising at least one filter appliance for the filtering of noxious particles, dust particles or other foreign particles out of a gaseous flow medium, with a substrate (22) and a filter liquid (36) wetting the substrate (22),
**characterized in that**
in a casing (12) having an inlet opening (14) and an outlet opening (16), several filter appliances (20) are arranged successively, interspaced from each other and transversely to the direction of flow of the flow medium to be filtered, and that the substrates (22) of the filter appliances (20) have holes (72), the holes (72) of adjoining filter appliances (20) being offset relative to each other.

2. A filtering apparatus according to claim 1,
**characterized in that**
the filter liquid contains as its main constituent, glycerine and/or glycol and additionally $SiO_2$ and/or $Al_2O_3$.

3. A filtering apparatus according to claim 1 or 2,
**characterized in that**
the filter liquid contains metal oxides with a catalytic action.

4. A filtering apparatus according to one of claims 1 to 3,
**characterized in that**
the substrate (22) is a plate-shaped foam body permeable to gas, which body is impregnated or soaked by the filter liquid (36) forming the filter layer.

5. A filtering apparatus according to claim 4,
**characterized in that**
the substrate (22) is assigned a stiffening element (24) allowing the gaseous flow medium to pass.

6. A filtering apparatus according to claim 4 or 5,
**characterized in that**
the foam body (22) has through holes (72) extending from one main surface (74) to the opposite main surface (74) of the foam body (22) and that, if required, the stiffening element (24) is provided with holes (76) corresponding to the holes (72) of the foam body (22) and being aligned therewith.

7. A filtering apparatus according to one of claims 1 to 4,
**characterized in that**
the substrate (22) is a plate made of a lattice-network or a foamed ceramic.

8. A filtering apparatus according to one of claims 1 to 7,
**characterized in that**

in the casing (12), provision is made under the substrates (22) for a collecting chamber (38) for the filter liquid (36), and about the substrates (22) for a device (44) for spraying the substrates (22), the spraying device (44) being connected to the collecting chamber (38) by means of a pipeline (40, 42 or 40, 66, 70, 42 respectively) which has a pump (46) for circulating the filter liquid (36) from the collecting chamber (38) to the spraying device (44).

9. A filtering apparatus according to claim 8,
   **characterized in that**
   in the flow path of the filter liquid (36), provision is made between the collecting chamber (38) and the spraying device (44) for a heat exchanger (47).

10. A filtering apparatus according to claim 9,
    **characterized in that**
    in the casing (12) downstream beyond the inlet opening (14), provision is made for a swirling appliance (52) for the flow medium to be filtered.

11. A filtering apparatus according to one of claims 1 to 10,
    **characterized in that**
    in the casing (12) downstream behind the last filter appliance (20) and at an upstream distance therefrom, ahead of the outlet opening (16), provision is made for a receptacle (30) for the droplets of the filter liquid (36) entrained with the flow medium.

12. A filtering apparatus according to claim 11,
    **characterized in that**
    the receptacle (30) has several layers of lamellar elements (60), the lamellar elements (60) of one layer being interspaced from each other so as to form gaps (62) and the lamellar elements (60) of adjoining layers being offset one after the other in such a way that the gap (62) of one layer is covered by lamellar elements (60) of the adjoining layer.

13. A filtering apparatus according to claim 12,
    **characterized in that**
    the lamellar elements (60) have a trough-shaped design, the concave inner side of the lamellar elements (60) facing the direction of flow of the flow medium.

14. A filter apparatus according to one of claims 11 to 13,
    **characterized in that**
    in the casing (12), provision is made between the receptacle (30) and the outlet opening (16) for a deflecting cap (37) in the vicinity of the outlet opening (16).

15. A filtering apparatus according to one of claims 1 to 14,
    **characterized in that**
    the substrates (22) and if applicable, the receptacle (30) are arranged in the casing (12) against the perpendicular (line) and made to slope from the front top to the rear bottom with reference to the direction of flow of the gaseous flow medium determined by the inlet opening (14).

**Revendications**

1. Système de filtration, se composant d'au moins un dispositif filtrant en vue de l'élimination par filtration, dans un courant gazeux, des particules polluantes, poussières et autres substances étrangères, comportant un substrat (22) et un liquide filtrant imbibant ce substrat (22), caractérisé en ce que, dans un boîtier (12) présentant un orifice d'introduction (14) et un orifice de sortie (16), sont disposés plusieurs dispositifs filtrants (20), transversalement à la direction d'écoulement du courant gazeux à filtrer, les uns derrière les autres et espacés l'un de l'autre, et en ce que le substrat (22) des dispositifs filtrants (20) présente des perforations (72) telles que les perforations (72) de dispositifs filtrants (20) voisins soient décalés les uns par rapport aux autres.

2. Système de filtration selon la revendication 1, caractérisé en ce que le liquide filtrant comporte comme composant principal de la glycérine et/ou un glycol, et contient additionnellement $SiO_2$ et/ou $Al_2O_3$.

3. Système de filtration selon l'une des revendications 1 et 2, caractérisé en ce que le liquide filtrant contient des oxydes métalliques à activité catalytique.

4. Système de filtration selon l'une des revendications 1 à 3, caractérisé en ce que le substrat (22) consiste en une plaque de mousse laissant passer les gaz et imprégnée ou imbibée du liquide (36) formant la couche filtrante.

5. Système de filtration selon la revendication 4, caractérisé en ce que le substrat (22) est associé à un élément de renforcement (24) laissant passer le courant gazeux.

6. Système de filtration selon l'une des revendications 4 et 5, caractérisé en ce que la plaque de mousse (22) présente des perforations (72) s'étendant d'une surface principale (74) à la surface principale opposée (74) de la plaque (22) et que éventuellement l'élément de renforcement (24) présente des perforations (76) correspondant aux perforations (72) de la plaque de mousse (22) et alignées avec elles.

7.  Système de filtration selon les revendications 1 à 4, caractérisé en ce que le substrat (22) est une plaque de grillage ou une céramique poreuse.

8.  Système de filtration selon les revendications 1 à 7, caractérisé en ce que , dans le boîtier (12) est ménagé, sous le substrat (22), un espace de récupération (38) du liquide filtrant (36), et au-dessus du substrat (22) est disposé un dispositif de ruissellement (44) de manière telle que le dispositif de ruissellement (44) est relié à l'espace des récupération (38) par une tubulure (40, 42 ou 40, 66, 70, 42), qui comporte une pompe (46) pour le recyclage du liquide filtrant (36) depuis l'espace de récupération (38) vers le dispositif de ruissellement (44).

9.  Système de filtration selon la revendication 8, caractérisé en ce que, sur le trajet du liquide filtrant (36) entre l'espace de récupération (38) et le dispositif de ruissellement (44) est prévu un échangeur de chaleur (47).

10. Système de filtration selon la revendication 9, caractérisé en ce que, dans le boîtier (12), est prévu en aval de l'orifice d'introduction (14), un dispositif (52) provoquant le tourbillonnement du courant gazeux à filtrer.

11. Système de filtration selon l'une des revendications 1 à 10, caractérisé en ce que, dans le boîtier (12), en aval du dernier dispositif filtrant (20) et espacé en amont de l'orifice de sortie (16), est prévu un dispositif de capture (30) des gouttelettes du liquide filtrant (36) entraînées par le courant gazeux.

12. Système de filtration selon la revendication 11, caractérisé en ce que le dispositif de capture (30) se compose de plusieurs couches d'éléments lamellaires (60) dans lesquelles les éléments lamellaires (60) d'une couche sont espacés les uns des autres pour créer des fentes (62), et les éléments lamellaires (60) situés les uns derrière les autres de couches voisines sont décalés les uns par rapport aux autres, de manière telle que les fentes (62) d'une couche soient recouvertes par les éléments lamellaires (60) de la couche voisine.

13. Système de filtration selon la revendication 12, caractérisé en ce que les éléments lamellaires (60) ont la forme de gouttières de manière telle que la face interne concave des éléments lamellaires (60) fait face à la direction de l'écoulement du courant gazeux.

14. Système de filtration selon l'une des revendications 11 à 13, caractérisé en ce que, dans le boîtier (12) est prévu une calotte de butée (37) entre le dispositif de capture (30) et l'orifice de sortie (16) au voisinage de ce dernier.

15. Système de filtration selon l'une des revendications 1 à 14, caractérisé en ce que le substrat (22) et éventuellement le dispositif de capture (30) situés dans le boîtier (12) sont disposés inclinés depuis le haut à l'avant vers le bas à l'arrière par rapport à la direction d'écoulement du courant gazeux et par rapport à la direction perpendiculaire à l'orifice d'introduction.

FIG.1

FIG.2

FIG.3

FIG.4

FIG.5

FIG.6

FIG.7

FIG.8

FIG.9

FIG.10